# EUROPEAN PATENT SPECIFICATION

(11) **EP 2 915 426 B1**
(45) Date of publication and mention of the grant of the patent: **14.04.2021**
(21) Application number: 15157207.0
(22) Date of filing: 02.03.2015
(51) Int. Cl.: A01N 59/06, A01N 59/08, A01N 65/00, A01P 3/00

(54) **USE OF COMPOUNDS FOR THE CONTAINMENT OF SYMPTOMS OF A KNOWN DISEASE FOR THE MAIN AGRICULTURAL CROPS**
VERWENDUNG VON VERBINDUNGEN ZUR EINDÄMMUNG DER SYMPTOME EINER BEKANNTEN KRANKHEIT FÜR DIE WICHTIGSTEN LANDWIRTSCHAFTLICHEN KULTUREN
UTILISATION DE COMPOSÉS POUR LE CONFINEMENT DE SYMPTÔMES D'UNE MALADIE CONNUE POUR LES CULTURES AGRICOLES PRINCIPALES

(30) Priority: 03.03.2014 IT RM20140097
(43) Date of publication of application: 09.09.2015
(73) Proprietor: Università degli Studi di Teramo, 64100 Teramo Località Colleparco (IT)
(72) Inventor: Calzarano, Francesco, 64020 Bellante (IT)
(74) Representative: Di Giovine, Paolo

(56) References cited:
- JP-A- 2004 290 162
- LAËTITIA JANNIN ET AL: "Brassica napus Growth is Promoted by Ascophyllum nodosum (L.) Le Jol. Seaweed Extract: Microarray Analysis and Physiological Characterization of N, C, and S Metabolisms", JOURNAL OF PLANT GROWTH REGULATION, vol. 32, no. 1, 15 May 2012 (2012-05-15), pages 31-52, XP055133085, ISSN: 0721-7595, DOI: 10.1007/s00344-012-9273-9
- Stefano Di Marco ET AL: "Effect of biostimulant sprays on Phaeomoniella chlamydospora and esca proper infected vines under greenhouse and fi eld conditions", , 1 April 2007 (2007-04-01), XP055133062, Retrieved from the Internet: URL:http://www.fupress.net/index.php/pm/ar ticle/viewFile/2874/2556# [retrieved on 2014-08-04]
- "Abstracts of oral and poster presentations given at the 8th International Workshop on Grapevine Trunk Diseases", PHYTOPATHOLOGIA MEDITERRANEA, vol. 51, 18 June 2012 (2012-06-18), pages 410-452, XP055133064,
- S. LAVEZZARO ET AL: "Defence inductors tested against grapevine downy mildew in Piedmont. - CAB Direct", GIORNATE FITOPATOLOGICHE, vol. 2, 16 March 2012 (2012-03-16), pages 483-490, XP055133069, ISBN: 978-8-84-913636-4
- JAYARAJ JAYARAMAN ET AL: "Commercial extract from the brown seaweedreduces fungal diseases in greenhouse cucumber", JOURNAL OF APPLIED PHYCOLOGY, KLUWER ACADEMIC PUBLISHERS, DO, vol. 23, no. 3, 6 July 2010 (2010-07-06), pages 353-361, XP019914083, ISSN: 1573-5176, DOI: 10.1007/S10811-010-9547-1
- D Kok ET AL: "THE INFLUENCES OF DIFFERENT SEAWEED DOSES ON TABLE QUALITY CHARACTERISTICS OF CV. TRAKYA ILKEREN (VITIS VINIFERA L.)", Bulgarian Journal of Agricultural Science, 1 January 2010 (2010-01-01), pages 429-435, XP055133090, Retrieved from the Internet: URL:http://www.agrojournal.org/16/04-04-10 .pdf [retrieved on 2014-08-04]
- JEANNETTE VERA ET AL: "Seaweed Polysaccharides and Derived Oligosaccharides Stimulate Defense Responses and Protection Against Pathogens in Plants", MARINE DRUGS, MDPI, BASEL, CH, vol. 9, no. 12, 1 December 2011 (2011-12-01), pages 2514-2525, XP002725876, ISSN: 1660-3397, DOI: 10.3390/MD9122514 [retrieved on 2011-11-29]

## Description

The present invention relates to new compositions and methods for the prevention and treatment of the esca disease of grapevine, in particular it relates to compositions and methods for the containment the manifestation of symptoms on the epigeal apparatus of said disease of grapevine, in particular in the forms of the esca groups wherein such symptoms consist in a typical chlorine-necrosis in the internerval spaces on the leaves giving them the the appellative of "striped leaves", and on the berries in specific purple notches and dieback of varying severity which could involve whole fields of the canopy.

### STATE OF PRIOR ART

The esca disease is a group of diseases of grapevine caused by a group of funghi colonizing the lymphatic vessels and wood, which in the forms of the disease called "young esca" and "Esca proper" are responsible for the manifestation of typical symptoms on the epigeal apparatus, the entity thereof results to be proportional to the damages to the production.

The several performed experiments have not yet detected an effective defence strategy. The field of the struggle against the esca disease perhaps is the one which has most felts the effects of the late resumption of the studies on the disease, which has taken place only in recent time together with the particular spread recorded in the last twenty years. The several, still a little clear, aspects of the pathogenesis and epidemiology of ampelopathy or related to the biology of pathogens and to the aetiological framework have made the discovery of an effective defence strategy against the "esca disease" very problematic. Notwithstanding the recent experimental acquisitions, the preparation of adequate defence techniques, which can be transferred to the grapevine growers, results to be still difficult. An additional and not negligible difficulty is further given by the high number of years necessary to be proof of the validity of a struggle-in-the-field method; in facts, the confirmation of such techniques is based upon the capability of vegetative recovery and on the vigour of the plants as well as on the expression of symptoms on vegetation and indeed for these reasons it results to be essential to prolong the observations for a very long time, for several years, in order to verify during time the physiological conditions of grapevines or to distinguish the natural remission of symptoms from the effect of the phytoiatric treatment.

Di Marco et al., Phytopatol. Mediterr (2009) 49, pp 47-58, discloses the effect of Ascophyllum nodosum extract sprayed as well as other biostimulants on Esca proper infected vines.

The abstract of presentations given at the 8^{th} international workshop on grapevines trunk diseases, published on Phytopatologia Mediterranea (2012) 51, 2, pp 410-452, discloses a strategy for the reduction of esca foliar symptoms, comprising selective foliar fertilization using calcium, magnesium or combinations thereof to reduce the manifestation of esca symptoms.

S.Lavezzaro et al., Giornate Fitopatologiche (2012) 2, pp. 483-490 discloses that the addition of copper to product polysaccharides and phenylpropanoids considerably increases the effectiveness thereof.

Then, it is desirable to provide new compositions and methods for the treatment of the esca disease of grapevine, in particular compositions and methods able to reduce in an effective way the manifestations of symptoms of said disease on the epigeal apparatus of ill grapevines.

### SUMMARY OF THE INVENTION

The present invention is based upon the surprising discovery that by means of using a mixture of CaCl₂ and Mg(NO₃)₂ and an extract of algae belonging to the family of *Fucaceae* as defined in the claims it is possible reducing significantly the foliar symptoms (in the present description the words "foliar symptoms" are used as synonym of "symptoms on the epigeal apparatus" comprising leaf "stripes" and dieback on the berries and on plant portions) of the grapevine disease known as *esca disease.* The effectiveness of this mixture has been demonstrated by means of strict scientific experiments shown in details in the experimental section of the present description. It has been further demonstrated by means of comparative experiments that the addition of the extract of algae belonging to the family of *Fucaceae* in mixtures of CaCl₂ and Mg(NO₃)₂ increases in synergic way the effectiveness of the mixture in the containment of the foliar symptoms of the disease.

A first subject of the present invention is then a method for reducing the leaf symptoms associated with the esca *disease* of grapevine comprising the treatment of one or more plants belonging to the genus *Vitis* with a composition comprising an extract of algae belonging to the family of *Fucaceae,* CaCl₂ and Mg(NO₃)₂ as defined in the claims

A second subject of the present invention is the use of a mixture comprising an extract of algae belonging to the family of *Fucaceae,* CaCl₂ and Mg(NO₃)₂, as defined in the claims, for the treatment of the foliar symptoms associated with the esca disease of grapevine.

One of the main advantage associated to the invention consists in using active principles, such as the two experiment subject salts, with low cost (cost per minute ±0.80 €/Kg for the magnesium nitrate and ±0.75 €/Kg for the calcium chloride). Furthermore the preparation of such raw materials in industrial quantities would lower their cost by further decreasing the production costs of the subject composition. Such active principles can be mixed with the different phytopharmaceuticals so as not to involve an increase in treatment costs of the vineyard firms.

One of the most advantageous aspects of the invention further consists in having used, since consolidated time, in agriculture the two salts (alone or in combination) and extracts of algae used as fertilizers, which does not request prolonged experiments in the authorized test facilities as requested in case of new molecules to be used in the field for the first time. The new aspect of the invention then consists in the different use of the different components aimed at containing the foliar symptoms of esca disease, a grapevine disease which is renown due to the wide spread worldwide and to the known lack in controlling methods and means forcing the grapevine growers to suffer from heavy losses and qualitative decreases of production in each vegetative season. Such aspects highlight the importance of the invention which in short time could concretize in placing on the market a new product, with the described peculiarities, in absence of concurrents. The action of the mixture of the three described compounds is related to interference with the mechanisms starting in the first period of the vegetative season in the ill plants and will involve the manifestation of the foliar symptoms and on the production in the subsequent phenologic steps, from the pre-closure of the bunch to the harvest maturity. The leaf treatments with the described compounds, performed in the first period of the season, from the vegetative recovery to the pre-closure of the bunch, determine a significant lowering in the expression of symptoms with immediate applicative and economic effect for the grapevine grower who will not have to suffer from important quantitative and qualitative production losses. The treatments with the compounds of the present invention are mainly directed to favour in the affected grapevines the phenomenon of remission of symptoms, called "masking", which each year makes a fraction of diseased plants not to express the symptoms by appearing wholly healthy and able to carry out regularly the phenologic phases of the development cycle thereof. Surveys performed previously by the inventor and by some collaborators checked the substantial similarity of the production quantity and quality parameters between healthy grapevines and asymptomatic ill grapevines (subjected to the described phenomenon of "masking"), as well as the long survival of the grapevines affected by "young esca" and "*Esca proper*" the disease form thereto the invention method is directed in particular. Such acquisitions highlighted then the importance of the studies directed to know the mechanisms involved in the expression of the symptoms on the epigeal apparatus and to the search for compounds, necessarily with low or null environmental impact, able to interfere with such mechanisms and reduce significantly the manifestation of symptoms and lower the quantitative and qualitative production losses with the already mentioned important economic effect for the grapevine growers.

Other advantages, together with the features and the use modes of the present invention, will result evident from the following detailed description of some preferred embodiments, shown by way of example and not for limitative purpose.

### BRIEF DESCRIPTION OF THE FIGURES

Figure 1. Figure 1 shows the effect on incidence and gravity of the foliar symptoms of esca in the vineyard "Trebbiano d'Abruzzo" (2010).
Figure 2. Figure 2 shows the effect on incidence and gravity of the foliar symptoms of esca in the vineyard "Trebbiano d'Abruzzo" (2011).
Figures 3 and 4. Figures 3 and 4 show the effect on incidence and gravity of the foliar symptoms of esca in the vineyards "Montepulciano d'Abruzzo 1 and 2, respectively" (2011).
Figure 5. Figure 5 shows the effect on incidence and gravity of the foliar symptoms of esca in the vineyard "Trebbiano d'Abruzzo" (2012).
Figures 6 and 7. Figures 6 and 7 show the effect on incidence and gravity of the foliar symptoms of esca in the vineyards "Montepulciano d'Abruzzo 1 and 2, respectively" (2012)".
Figure 8. Figure 8 shows leaf areas of healthy grapevines and grapevines affected by esca disease treated with the mixture CaCl₂, Mg(NO₃)₂ and extract of algae (Vineyard Trebbiano d'Abruzzo - 2012)
Figure 9. Figure 9 shows the production of healthy grapevines and grapevines affected by esca disease treated with the mixture CaCl₂, Mg(NO₃)₂ and extract of algae (Vineyard Trebbiano d'Abruzzo - 2012)
Figure 10. Content of flavonoids in healthy and not treated asymptomatic leaves and in asymptomatic leaves treated with the mixture CaCl₂, Mg(NO₃)₂ and extract of algae.
Figure 11. Druses of calcium oxalate in healthy and not treated asymptomatic leaves and in asymptomatic leaves treated with the mixture CaCl₂, Mg(NO₃)₂ and extract of algae.

### DETAILED DESCRIPTION OF THE INVENTION

The present invention relates to a method reducing the foliar symptoms associated with the esca disease of grapevine comprising a step of treating one or more plants belonging to the genus *Vitis* with a composition comprising an extract of algae belonging to the family of *Fucaceae and* CaCl₂ and Mg(NO₃)₂ as defined in the claims; in particular the present invention relates to the treatment of plants belonging to the species *Vitis vinifera.*

In the present description under the term "reducing the foliar symptoms associated with the esca disease of grapevine" the reduction or removal of any manifestation of the plant on the epigeal apparatus, due to this disease.

The composition used in the method of the present invention comprises a quantity of CaCl₂ comprised between 30 and 35%, a quantity of Mg(NO₃)₂ comprised between 24 and 30%, a quantity of extract of algae comprised between 6 and 15%. The percentages shown herein have to be considered as expressed in weight percentage with respect to the composition.

The compositions used in the method of the present invention could be mixed with one or more phytopharmaceuticals so as not to involve an increase in treatment costs of vineyard firms.

The algae therefrom the extract used in the method of the invention belong to the family of *Fucaceae* (Classe *Phaeophyceae*, Ordine *Fucales*), in particular different varieties or species could be used such as for example *Ascophyllum nodosum*, *Fucus vesiculosus, Fucus serratus.*

Extracts of algae suitable to be used in the composition, for example, are those commercially available under the name "Ecolicitor" (pure extract of algae) or present in composition with various macro and microelements.

According to an embodiment alga extracts rich in adenine derivatives could be used, such as for example isopentenyladenine isopentenyladenosine

According to an embodiment the alga extract could be prepared by means of washing, grinding, extraction and optionally concentration passages. The extraction passage, for example, could be performed in acid solvent at a temperature of about 90-110°C for a period of time comprised between 30 minutes and 1 hour and then at room temperature for a period of time of about 24- 48 hours.

According to an embodiment the composition used in the method could be in liquid form, that is an aqueous solution of the two salts thereto the extract of algae in liquid form is added, which remains under suspension. On the occasion of the treatments implemented by foliar spraying, mixing the three components, and distributing uniformly on the vegetable surfaces to be treated, is guaranteed by the mixers inside the used machines, air-convection sprayers or pneumatic sprayers.

According to an embodiment of the method the composition will be applied on the plants to be treated in a quantity comprised between 4 and 5 litres per hectare, preferably 4 litres per hectare.

According to an embodiment some specific portions of the plants will be treated, that is the canopy of the plants (or epigeal apparatus).

According to a preferred embodiment of the method the plants will be subjected to 9 treatments by foliar spraying, with ten-day frequencies, in the months of May, June and July corresponding to the period of seasonal vegetative growth of grapevine, that is the phenologic phases elapsing from the vegetative recovery to the pre-closure of the bunch.

Even all compositions described above are subject of the present invention.

Herebelow examples are shown which have the purpose of illustrating better the properties of the composition of the present invention and some specific embodiments; such examples are not to be considered in any way as a limitation of the previous description and of the subsequent claims.

### EXAMPLES AND EXPERIMENTAL DATA

The substantial similarity of the main parameters of production quality between healthy grapevines and asymptomatic grapevines affected by esca (Calzarano *et al*., 2001; 2004), the longevity of the ill grapevines (Calzarano *et al.,* 2007), the tendency of higher levels of calcium and magnesium in the asymptomatic ill grapevines (Calzarano *et al.,* 2009) as well as the lack of active formulas against the esca have urged developing surveys directed to verify a mixture of calcium chloride, magnesium nitrate and an extract of algae (*Phaeophyceae* Class, *Fucales* Order, *Fucaceae* Family), carrier and biostimulating component, administered by means of foliar spraying on the grapevines affected by the disease and aimed at containing the manifestation of the foliar symptoms and on the production. At the same time the quality parameters of grapes and the vegetative growth of the treated affected plants by means of detecting the leaf areas as well as the onset of possible phytotoxic effects. Even preliminary surveys were performed aimed at verifying the variations in the levels of trans-resveratrol, main phytoalexin of grapevine, in the leaves of treated plants and histological observations.

A vineyard of the vineyard cultivation Trebbiano d'Abruzzo, which has been present for 37 years, located in Piane Tronto, Controguerra (TE), grown with GDC, was monitored for the expression of the foliar symptoms of esca since 1994, for 19 subsequent years. The monitoring of the symptoms, prolonged in time, allowed distinguishing the healthy grapevines from the apparently healthy but asymptomatic ill ones and evaluating the differences of various parameters between the two categories of grapevines, both in previous studies and in the subject one.

In 2010 the field was divided into treated parcels and not treated control parcels. Based upon the knowledge acquired on the disease 9 leaf treatments with the above-mentioned mixture were performed, every 10 days, starting from the phase "three leaves unfolded" (Lorenz *et al.,* 1995), a little after the vegetative recovery, until the pre-closure of bunch, with the purpose of interfering with the mechanisms generating in the grapevines affected in this season period and in the subsequent phenologic phases lead to the manifestation of the symptoms on the epigeal apparatus. In 2011 and in 2012 the treatment programme was broadened by administering, apart from the described mixture, even the two salts without extract of algae, both in mixture and singularly, and extended to other two vineyards of the vineyard cultivation Montepulciano d'Abruzzo, which has been present for 34 years, located in S. Maria Assunta, Mosciano Sant'Angelo (TE), grown with Curtain. The distributed dose of the mixture calcium chloride, magnesium nitrate and extract of algae in every case was 4 I/ha whereas in the several plants the concentration of the product from 500 to 1000 ml/hl was varied in relation to the used sprayers and to the consequent distributed volumes, 8 hl/ha in the vineyard "Trebbiano d'Abruzzo" with air-convection sprayers and 4 hl/ha in the vineyards "Montepulciano d'Abruzzo" with pneumatic sprayer. The mentioned mixture is constituted by 466 g of CaCl₂, 403 g of Mg(NO₃)₂, 75.03 ml of organic component (extract of algae Fucaceae) and 466 ml of H₂O per 1 l of solution. The doses of CaCl₂ and Mg(NO₃)₂ distributed without extract of algae, singularly or in mixture, were analogous to those contained in the whole mixture. The surveys of the foliar symptoms of esca were performed each year in the month of September, in the period comprised between 18 and 22, a little before the harvest maturity, period of maximum expression of the disease. In the vineyard "Trebbiano d'Abruzzo", wherein the expression of the symptoms was monitored for several subsequent years, it was possible calculating the incidence the incidence of the symptoms in percentage on the epigeal apparatus (number of symptomatic grapevines / number of grapevines of the vineyard) by excluding from the number of grapevines of the vineyard of the vineyard the healthy grapevines, (Calzarano *et al.,* 2004; 2007; 2009). In the vineyards "Montepulciano d'Abruzzo", wherein the observations of the symptoms started in 2010, the incidence calculation was performed by comparing the number of symptomatic grapevines to the total number of grapevines existing in the vineyards. The calculation of the expression intensity in percentage (gravity of manifestation of the symptoms on the expressing ill plants) was performed, in the compared parcels, by having recourse to the index ∑N x 100 / (Y x Z) wherein ∑N = summation of the symptom intensity values per plant; Y = number of observed plants (symptomatic and asymptomatic ill plants, in the vineyard of the grapevine cultivation "Trebbiano d'Abruzzo"; total plants existing in the vineyards of the grapevine cultivation "Montepulciano d'Abruzzo"); Z = maximum values of the symptom expression scale (McKinney, 1923).

The calculation of the leaf areas was performed in 2012 in the vineyard "Trebbiano d'Abruzzo" in the groups of healthy and asymptomatic grapevines treated with the mixture CaCl₂, Mg(NO₃)₂ and extract of algae and in the healthy and not treated asymptomatic ones. For each group of grapevines 24 shoots were chosen, 12 eastward and 12 westward; the shoots were collected at the end of the vegetative growth, brought to laboratory wherein all leaves were detached from the shoot axis; the leaves were photographed by keeping distinct the foliation of the primary shoots from that of the secondary shoots and then one proceeded to calculate the leaf area by using the image software "Image-pro plus" version 7.0.

The quantities of produced grapevines were calculated in the vineyard "Trebbiano d'Abruzzo", in the vegetative season 2012, after harvest maturation, in the groups of healthy and asymptomatic grapevines treated with the mixture CaCl₂, Mg(NO₃)₂ and extract of algae and in the healthy and not treated asymptomatic ones. The calculation was performed in a sample of 6 plants for each one of the mentioned groups, by counting even the number of produced bunches.

The levels of the main quality parameters, reducing sugars and total acidity, were checked in 2012, in the different vineyards subjected to examination, in the healthy and asymptomatic grapevines treated with the mixture CaCl₂, Mg(NO₃)₂ and extract of algae and in the healthy and not treated asymptomatic ones. For each group of grapevines 3 samples of berries weighing 500 g were obtained by collecting alternatively from the wings, central portion and tips of bunches existing in 12 grapes, then subjected to the analyses performed according to the official methods of the EC Regulation 2676/90, Enclosures 13, 24 and 5 respectively (AA. VV., 1990).

The content of Flavonoids in the leaves of grapes treated with the mixture CaCl₂ , Mg(NO₃)₂ and extract of algae and in the not treated leaves of the vineyard "Trebbiano d'Abruzzo", collected in the season 2012, was evaluated under optical microscopy by using the (yellow) coloration with Naturstoffreagenz-A (RNA), whereas the druse observation was performed under polarized light.

The content of trans-resveratrol in the leaves of the several groups of examined grapevines were evaluated in the vineyard "Trebbiano d'Abruzzo", in 2010 and 2011, by using the method of Calzarano *et al*., (2008).

The statistical analyses related to the manifestation of the foliar symptoms, in the subject vineyards, were performed in order to verify the data obtained in the treated parcels and in the compared control parcels, by considering in each parcel the sample of ill grapevines (symptomatic and asymptomatic ill grapevines by excluding the healthy and dead ones, that is those liable to express the symptom, in the vineyard Trebbiano d'Abruzzo; total existing grapevines, in the vineyards Montepulciano d'Abruzzo). With the purpose of verifying the incidence of the plants with symptoms an analysis of the one-way frequencies was performed by using the treatment as group variable and the symptom presence in binomial scale; the analysis results were expressed by means of test χ² (Chi square) and the probability value associated thereto. Analogously for checking the intensity of the foliar symptoms one had recourse to an analysis of the frequencies by using the treatment as group variable, and the symptom presence in categorical scale by adopting the arbitrary scale used for recording the symptoms, with progressive values variable from 0 to 100%; event in this case the results of analyses were expressed by means of test X² (Chi square) and the probability value associated thereto. The results related to the analytical determinations of the reducing sugars and of the total acidity of the production of treated healthy and asymptomatic grapevines and of the healthy and not treated asymptomatic ones, after harvest maturity, of the levels of *trans*-resveratrol in the leaves of treated healthy asymptomatic and symptomatic grapevines, compared to the leaves of the corresponding categories of not treated grapevines as well as those of the leaf areas and of the number and weight of grape bunches of healthy and treated and not treated asymptomatic ill grapevines were verified statistically by means of variance analysis and Student Test. The statistical analyses were performed by using SAS procedures version 8.1 (SAS Institute, Cary, North Carolina, USA).

Herebelow the treatment programme and the features of the parcels are shown:

**Table 1. 2010: Compared parcels in the vineyard Trebbiano d'Abruzzo subjected to experiment with the mixture calcium chloride, magnesium nitrate and extract of algae.**

| ***Location of grapevines*** | ***Parcel*** | ***Growing system*** | ***Number of rows*** | ***Number of grapevines*** | ***Area (m*²*)*** |
|---|---|---|---|---|---|
| Piane Tronto, Controguerra | Treated | GDC | 8 | 360 | 3000 |
| Piane Tronto, Controguerra | Not treated | GDC | 8 | 360 | 3000 |

**Table 2. 2010: Calendar of treatments performed in the vineyard Trebbiano d'Abruzzo with the mixture calcium chloride, magnesium nitrate and extract of algae.**

| ***Number of treatments and phenological phase*** | ***Treatment dates*** |
|---|---|
| **1:** three stretched leaves | 3 May 2010 |
| **2:** five stretched leaves | 14 May 2010 |
| **3:** nine stretched leaves | 24 May 2010 |
| **4:** early flowering | 4 June 2010 |
| **5:** separated flower buds | 14 June 2010 |
| **6** : setting | 24 June 2010 |
| **7:** pepper grain berry | 6 July 2010 |
| **8:** pre-closure of bunch | 19 July 2010 |
| **9:** pre-closure of bunch | 28 July 2010 |

**Table 3. 2011 and 2012: Compared parcels in the vineyards subjected to study.**

| ***Vineyard Trebbiano d'Abruzzo*** | | ***Vineyard Montepulciano d'Abruzzo 1*** | | ***Vineyard Montepulciano d'Abruzzo 2*** | |
|---|---|---|---|---|---|
| **Parcels** | **Number of grapevines** | **Parcels** | **Number of grapevines** | **Parcels** | **Number of grapevines** |
| CaCl₂ + Mg(NO₃)₂+ extract of algae | 180 | CaCl₂ + Mg(NO3)₂ + extract of algae | 100 | CaCl₂ + Mg(NO3)₂ + extract of algae | 150 |
| CaCl₂ | 180 | CaCl₂ | 100 | Check | 150 |
| Mg(NO₃)₂ | 180 | Mg(NO3)₂ | 100 | / | |
| CaCl₂ + Mg(NO₃)₂ | 180 | CaCl₂ + Mg(NO3)₂ | 100 | / | |
| Check | 180 | Check | 100 | / | |

**Table 4. 2011 and 2012: Calendar of treatments performed in the vineyards subjected to study**

| | | | |
|---|---|---|---|
| ***Number of treatment and phenological Phase*** | ***Treatment date*** | | |
| | ***Trebbiano d'Abruzzo*** | ***Montepulciano d'Abruzzo 1*** | ***Montepulciano d'Abruzzo 2*** |
| **1:** three stretched leaves | 5 May 2011 | 11 May 2011 | 12 May 2011 |
| | 9 May 2012 | 10 May 2012 | 11 May 2012 |
| **2:** five stretched leaves | 13 May 2011 | 19 May 2011 | 19 May 2011 |
| | 18 May 2012 | 19 May 2012 | 21 May 2012 |
| **3:** nine stretched leaves | 23 May 2011 | 26 May 2011 | 26 May 2011 |
| | 30 May 2012 | 30 May 2012 | 2 June 2012 |
| **4:** early flowering | 3 June 2011 | 3 June 2011 | 3 June 2011 |
| | 8 June 2012 | 9 June 2012 | 11 June 2012 |
| **5:** separated flower buds | 15 June 2011 | 16 June 2011 | 16 June 2011 |
| | 18 June 2012 | 19 June 2012 | 20 June 2012 |
| **6** : setting | 23 June 2011 | 27 June 2011 | 27 June 2011 |
| | 2 July 2012 | 1 July 2012 | 3 July 2012 |
| **7:** pepper grain berry | 7 July 2011 | 8 July 2011 | 8 July 2011 |
| | 11 July 2012 | 11 July 2012 | 12 July 2012 |
| **8:** pre-closure of bunch | 15 July 2011 | 17 July 2011 | 17 July 2011 |
| | 20 July 2012 | 21 July 2012 | 21 July 2012 |
| **9:** pre-closure of bunch | 26 July 2011 | 31 July 2011 | 31 July 2011 |
| | 31 July 2012 | 31 July 2012 | 31 July 2012 |

### Results

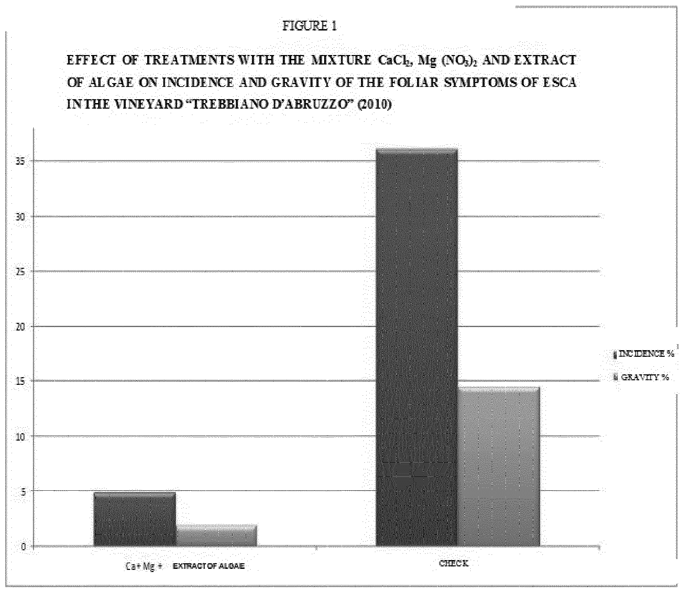

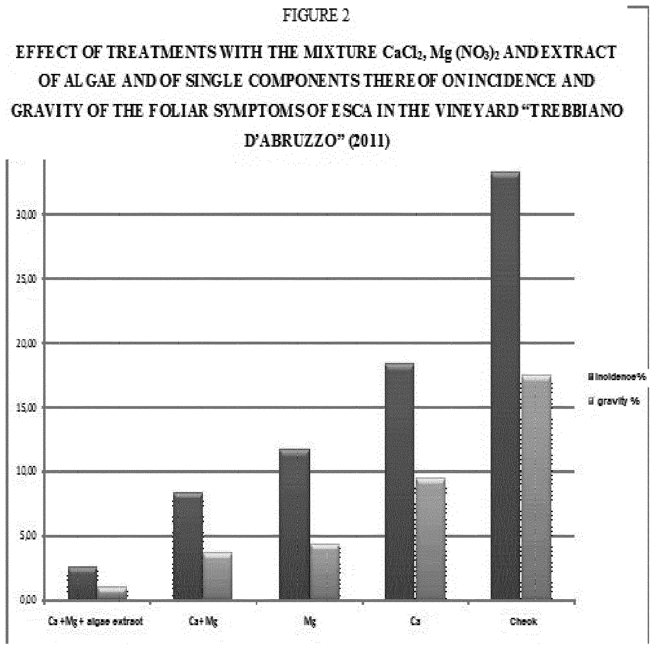

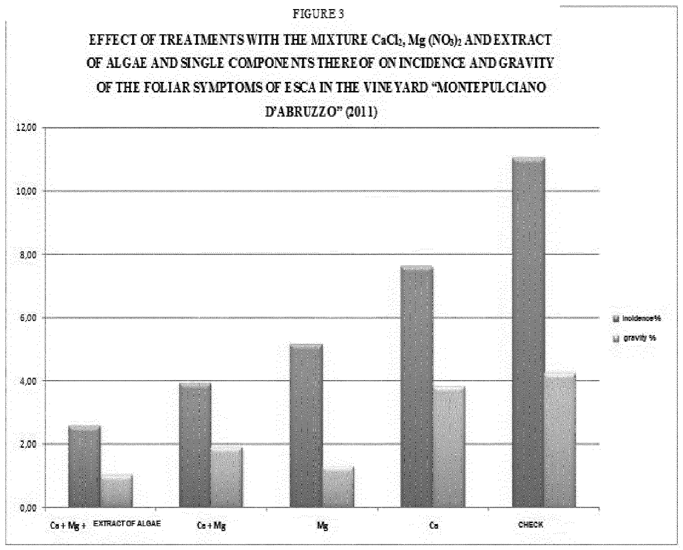

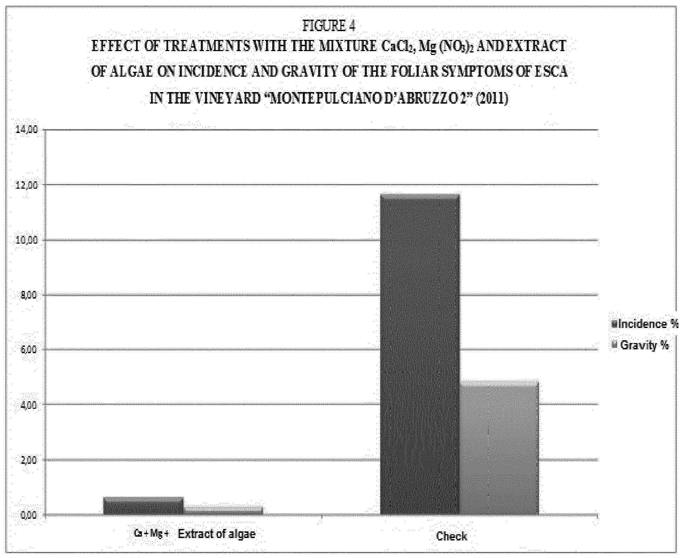

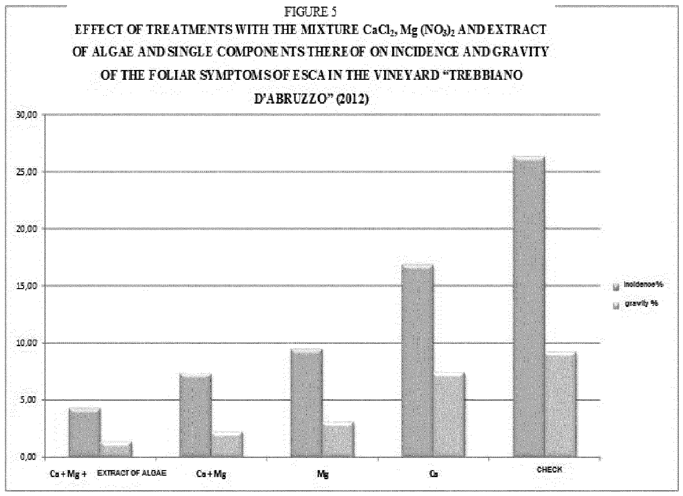

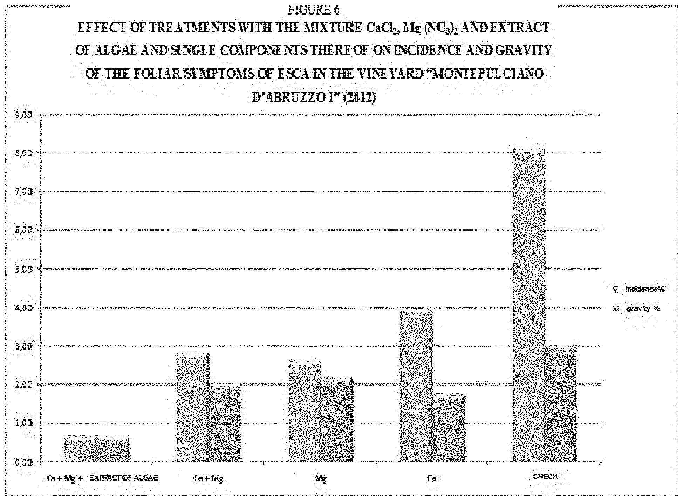

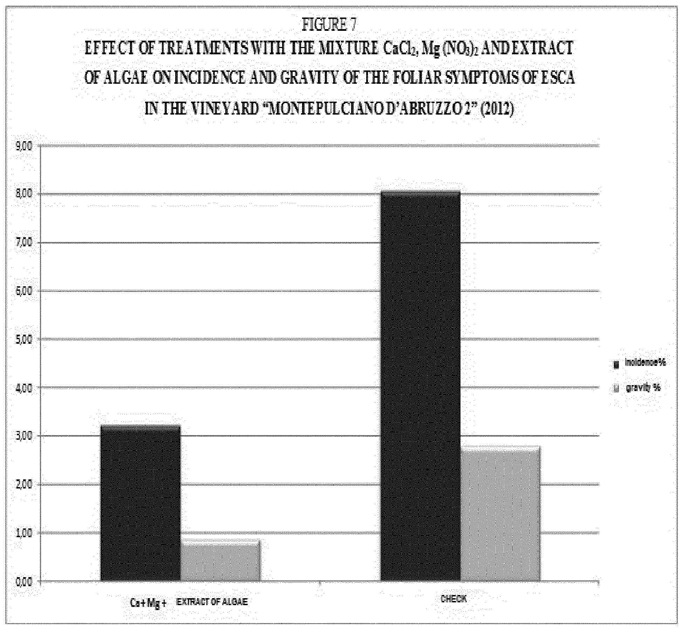

The surveys of the foliar symptoms of esca, performed in the month of September, al little before the harvest maturity, period of maximum disease expression, in 2010 highlighted the particular effectiveness of the calcium chloride-, magnesium nitrate- and extract of algae-based mixture both in the incidence containment and in the symptom expression gravity (Figure 1). In the following years, 2011 and 2012, the mixture effectiveness was confirmed by the results obtained in each one of the three vineyards (Figures 2, 3, 4, 5, 6 and 7). A definitely more limited effectiveness was obtained with the administration of the mixture CaCl₂ + Mg(NO₃)₂ without extract of algae, whereas the distribution of the single components, CaCl₂ or Mg(NO₃)₂, highlighted still lower effects (Figures 2, 3, 4, 5, 6 and 7). The statistical analyses confirmed the results of the mixture of calcium chloride, magnesium nitrate and extract of algae on the particular capability of reducing the manifestation of symptoms of esca and confirmed the less and more controversial effectiveness of the mixture of the two salts without extract of algae or calcium chloride and magnesium nitrate administered singularly (Table 5). In the vineyards "Montepulciano d'Abruzzo 1 and 2" the less statistical meaningfulness recorded in 2012 between the values detected in the parcels treated and not treated with the mixture CaCl₂ + Mg(NO₃)₂ and extract of algae is to be attributed to the considerable natural decrease in the manifestation of symptoms detected in the control parcels.

**Table 5. Results of statistical analyses: comparisons between incidence and intensity of the foliar symptoms of esca of grapevines treated with the mixture CaCl₂, Mg(NO₃)₂ + extract of algae or components thereof and not treated grapevines (Test χ²).**

| ***Vineyards and Dates of symptom detection*** | ***Trebbiano d'Abruzzo* 28 September 2010** | ***Trebbiano d'Abruzzo* 22 September 2011** | ***Montepulciano d'Abruzzo 1* 23 September 2011** | ***Montepulciano d'Abruzzo 2* 24 September 2011** | ***Trebbiano d'Abruzzo* 29 September 2012** | ***Montepulciano d'Abruzzo 1* 25 September 2012** | ***Montepulciano d'Abruzzo 2* 25 September 2012** |
|---|---|---|---|---|---|---|---|
| ***Ca, Mg + extract of algae* / *Incidence* Check** | < 0.0001 | < 0.0001 | 0.0039 | < 0.0001 | < 0.0001 | 0.0022 | 0.0650 |
| ***Ca, Mg + extract of algae* / *Intensity* Check** | < 0.0001 | < 0.0001 | 0.0243 | 0.0004 | 0.0006 | 0.1037 | 0.0581 |
| ***Ca* + *Mg* / *Incidence* Check** | / | < 0.0001 | 0.0765 | / | 0.0006 | 0.1460 | / |
| ***Ca + Mg* / *Intensity* Check** | / | 0.0002 | 0.1888 | / | 0.0029 | 0.6110 | / |
| ***Mg*/ *Incidence* Check** | / | 0.0008 | 0.1516 | / | 0.0045 | 0.2539 | / |
| ***Mg*/ *Intensity* Check** | / | 0.0004 | 0.0545 | / | 0.0133 | 0.9737 | / |
| ***Ca*/ *Incidence* Check** | / | 0.0135 | 0.4252 | / | 0.0944 | 0.2541 | / |
| ***Ca*/ *Intensity* Check** | / | 0.0353 | 0.8354 | / | 0.5274 | 0.4487 | / |

The differences detected between the compared parcels highlighted in red result to be highly significant for the values lower than 0.05.

The values between 0.05 and 0.1 highlighted in light blue correspond to the minimum level of meaningfulness.

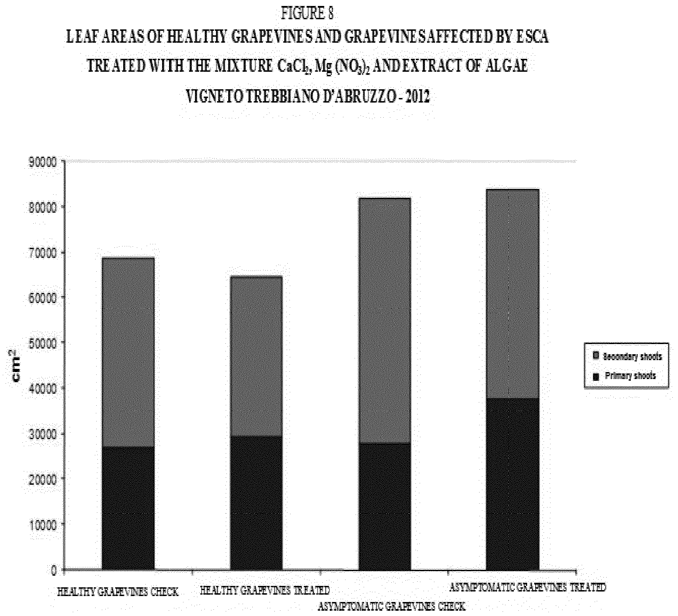

The observations performed on the treated grapevines allowed excluding the onset of phytotoxicity phenomena or effects lowering the vegetative growth. The measurements of the leaf areas, performed in the vineyard "Trebbiano d'Abruzzo" at the end of the seasonal growth phase, did not highlight statistically significant variations between treated and not treated healthy grapevines, both related to the primary and secondary foliation. In the asymptomatic ill grapevines, instead, the area of the primary leaves observed in the treated grapevines with respect to the not treated one (Figure 8, Table 8), resulted to be significantly bigger

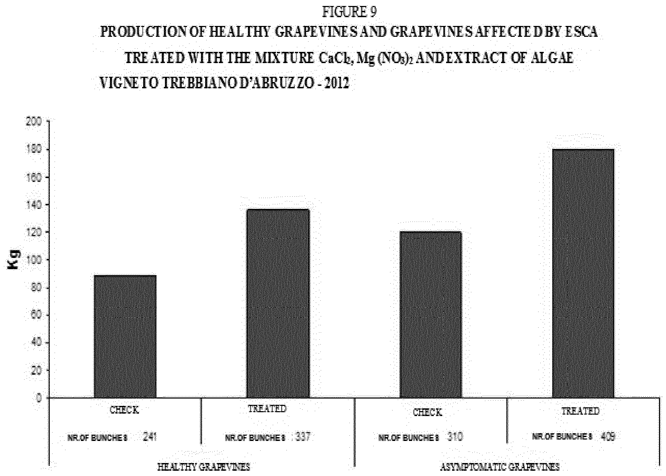

Furthermore, in the same vineyard, a statistically significant increase in the production quantity, for both the considered parameters (number of bunches and weight), both for the healthy and asymptomatic grapevines, was possible to be observed. However, in case of the last mentioned group the meaningfulness resulted to be smaller, P < 0.10 (Figure 9, Table 8). Even the production quality of the treated grapevines, evaluated in the vineyards Trebbiano d'Abruzzo and Montepulciano 1, appeared to have significantly increased, although with different effects in the two plants (Table 6, Table 7). In the three years of experiments, then, phytotoxic effects on the treated vegetation were never detected, in each one of the three plants subjected to the study, or decrease in the vegetative growth, evaluated in the vineyard "Trebbiano d'Abruzzo"; in fact the differences found between treated and not treated grapevines resulted to be not significant to the statistical analysis, whereas the area of the primary leaves observed in the treated asymptomatic grapevines with respect to the corresponding not treated grapevines resulted to be statistically significant (Table 8). Such results could signal the different effect of the treatments in the two groups of grapevines, healthy and asymptomatic ill ones. In the latter the higher growth of the leaves of the primary shoots could be linked to the interference with the mechanisms responsible for the expression of the foliar symptoms determined by the administration of the mixture Salts + algae. However, this does not involve a harmful effect on the production which, even in the asymptomatic grapevines, resulted to be higher for both considered parameters, number and weight of bunches, although with less meaningfulness with respect to what observed in the treated healthy grapevines, which by the way do not need to spend energy to oppose the disease effects. In each case, although such hypothesis requests suitable deeper examinations, such results demonstrate that the action of the mixture Salts + algae on the manifestation of the symptoms does not involve deleterious effects on the vegetative growth and on the production, which, on the contrary, results however to have increased in all cases (Table 8). Even the effects of qualitative improvement in the production of the treated grapevines were confirmed by the statistical analyses. In particular, in the vineyard "Trebbiano d'Abruzzo", the slight decrease in sugars and the higher level of total acidity in the berries of treated healthy grapevines, with respect to the not treated healthy ones, resulted to be not statistically relevant, whereas on the contrary the differences found for the same parameters between grapes of treated asymptomatic grapevines, which had higher levels of sugars and less total acidity, and not treated ones (Table 7) resulted to be significant. In the vineyard "Montepulciano d'Abruzzo 1", the levels of sugars were significantly higher both in the grapes of healthy grapevines and in the treated asymptomatic ones, with respect to the corresponding not treated grapevines, whereas the total acidity was lower in the treated healthy grapevines, with respect to the not treated healthy ones, and similar between treated asymptomatic and not treated, but tendentially lower in the first ones.

| ***Table 6.* Reducing sugars and total acidity of grapes of grapevines treated with the mixture CaCl₂, Mg(NO₃)₂ + extract of algae** - **2012** | | | | |
|---|---|---|---|---|
| | **Trebbiano d'Abruzzo** | | **Montepulciano d'Abruzzo 1** | |
| | Sugars (gl⁻¹) | Total acidity(gl⁻¹) | Sugars (gl⁻¹) | Total acidity(gl⁻¹) |
| Not treated healthy grapevines | 198.30 | 5.30 | 220.00 | 8.87 |
| Not treated asymptomatic grapevines | 188.30 | 7.13 | 220.00 | 8.43 |
| Treated healthy grapevines | 193.80 | 5.57 | 235.80 | 8.30 |
| Treated asymptomatic grapevines | 198.30 | 5.80 | 238.80 | 8.30 |

**Table 7. Results of statistical analyses: comparisons between the levels of reducing sugars and total acidity of grapes of healthy and asymptomatic ill grapevines treated with the mixture CaCl₂, Mg(NO₃)₂ + extract of algae and of grapes of healthy and not treated asymptomatic ill grapevines (Student's t Test).**

| | ***Trebbiano d'Abruzzo*** | | ***Montepulciano d'Abruzzo 1*** | |
|---|---|---|---|---|
| | Reducing sugars (gl⁻¹) | Total acidity (gl⁻¹) | Reducing sugars (gl⁻¹) | Total acidity (gl⁻¹) |
| ***Treated healthy grapevines* / *Not treated healthy grapevines*** | 0.3753 | 0.2745 | 0.00004 | 0.0472 |
| ***Treated asymptomatic grapevines* / *Not treated asymptomatic grapevines*** | 0.0202 | 0.0007 | 0.00002 | 0.7089 |

**Table 8. Results of statistical analyses: comparisons between leaf areas, number and weight of bunches of grapes of healthy and asymptomatic ill grapevines treated with the mixture CaCl₂, Mg(NO₃)₂ + extract of algae and grapes of healthy and not treated asymptomatic ill grapevines (Student's t Test).**

| | ***Trebbiano d'Abruzzo*** | | ***Trebbiano d'Abruzzo*** | |
|---|---|---|---|---|
| | Leaf area primary shoots (cm²) | Leaf area secondary shoots (cm²) | Number of bunches | Weight of bunches (Kg) |
| ***Treated healthy grapevines* / *Not treated healthy grapevines*** | 0.411 | 0.424 | 0.036 | 0.035 |
| ***Treated asymptomatic grapevines* / *Not treated asymptomatic grapevines*** | 0.0005 | 0.621 | 0.093 | 0.073 |

The differences detected between the compared parcels highlighted in red result to be highly signifcative for values lower than 0.05. The values between 0.05 and 0.1 highlighted in light blue correspond to the minimum level of meaningfulness.

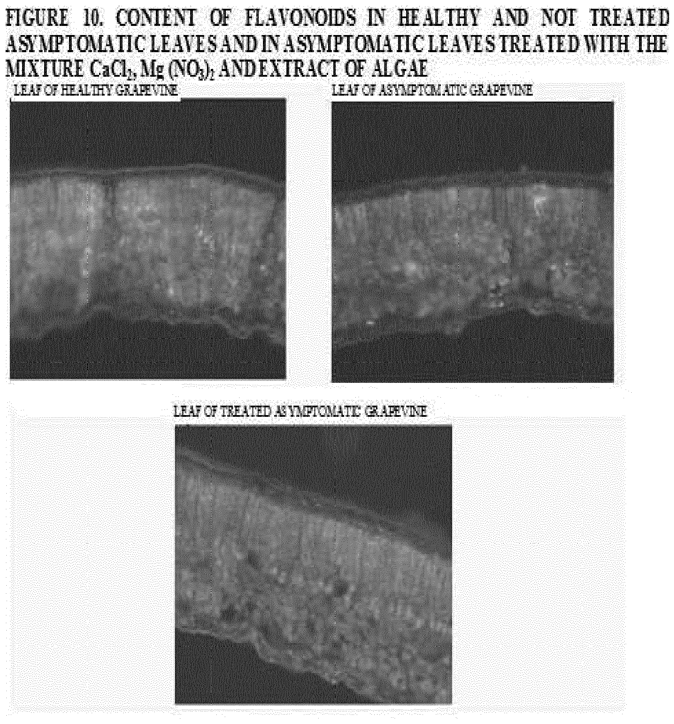

Preliminary information about the mechanisms of action was provided by the survey, performed in 2010 and 2011, of the levels of trans-resveratrol, still univocally higher in the treated leaves of each one of the three types of grapevines (Table 9). In particular in 2010 two collections were made, on 8 June, at half programme of the treatments, and on 27 July, at the end of the interventions; on occasion of the first collection the levels of the substance in the treated healthy grapevines were already significantly higher with respect to the corresponding not treated plants, whereas in the treated asymptomatic ones the levels tendentially were higher than the corresponding not treated ones and became significantly higher at the end of July, after closing the intervention plan. Such result, in agreement with the higher content of flavonoids, highlighted with the histological surveys (Figure 10), performed in 2012, with brighter yellow colouring, without discontinuity of the treated asymptomatic leaves with respect to the healthy and not treated asymptomatic ones, would signal the action of the mixture salts+algae in adjusting the defence response of the treated grapevines and the consequent increase in the phenomenon of reducing the expression of symptoms on the epigeal apparatus.

**Table 9. Levels of trans-resveratrol in the leaves of different types of grapevines treated and not treated with with the mixture CaCl₂, Mg(NO₃)₂ and extract of algae and comparisons in pairs to the Student test - Vineyard Trebbiano d'Abruzzo**

| **grapevine type** | **08/06/2010** | **collection dates 26/070/2010** | **29/07/2011** |
|---|---|---|---|
| | ppm s.s. | ppm s.s. | ppm s.s. |
| not treated healthy | 5.87 | 6.95 | 6.94 |
| treated healthy | 9.35 | 11.17 | 10.03 |
| **Student's *t*-test** | 0.010437013 | 0.006746286 | 0.000119259 |

| | ppm s.s. | ppm s.s. | ppm s.s. |
|---|---|---|---|
| not treated asymptomatic | 8.15 | 8.53 | 8.53 |
| treated asymptomatic | 8.98 | 10.43 | 12.87 |
| **Student's *t*-test** | 0.0148741711 | 0.003986956 | 0.000153855 |

| | ppm s.s. | ppm s.s. | ppm s.s. |
|---|---|---|---|
| not treated symptomatic | / | 17.83 | 19.44 |
| treated symptomatic | / | 25.46 | 27.43 |
| **Student's *t*-test** | / | 0.018079472 | 0.006195312 |

The differences detected between the compared parcels do not result to be significant for values higher than 0.05. The statistically significant differences were hightlighted in red.

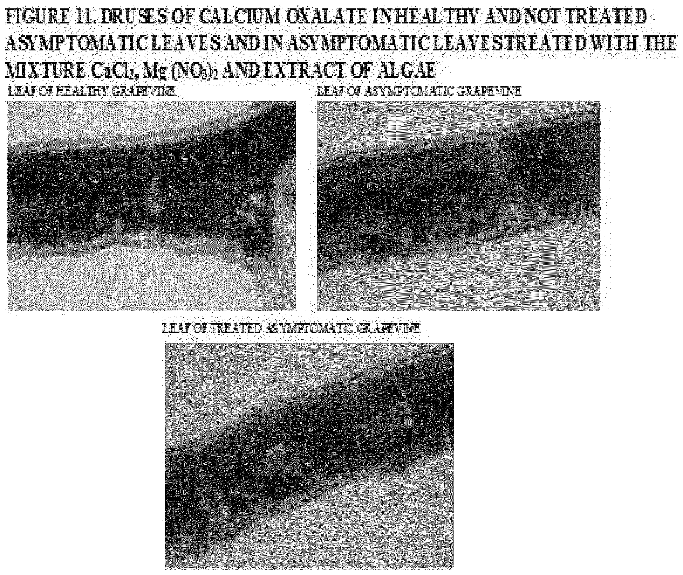

The positive effects of the calcium administrations observed in several pathosystems are particular numerous. By limiting to the grapevine and to the tree plants, the effects of application of calcium polysulphide can be reminded in the consistent reduction (80%) of the ascospores produced in the cleistotecs of *Uncinula necator* and of the infections on the berries (Gadoury *et al.,* 1994); the limited mycelial growth and the reduction in the produced ascospors of *Phytophthora nicotiana*, agent of the root rot of the bitter orange tree, after *in vitro* and *in vivo* administration of calcium salts (Campanella *et al.,* 2002); the effectiveness of various calcium salts in the significant reduction in the lesions caused by *Leucostoma persoonii* on peach tree (Biggs *et al.*, 1994). Calcium is a fundamental co-factor of the calmodulin, a transmitter of stress signal; the calcium accumulation in the apoplast and in cell compartments such as vacuoles and mitochondrions results to be essential to allow the increase in the concentration thereof in the cytosol in response to stress (Sanders *et al*., 1999; Reddy, 2001; Rudd & Franklin-Tong, 2001; White & Broadley, 2003) wherein it determines accumulation of calmodulin which is liable to control the concentration of salicylic acid and to adjust the defence response (Lecourieux *et al*., 2006; Du *et al.,* 2009). Furthermore, the higher quantities of phytoalexins, trans-resveratrol in the subject case, could derive from the stimula provided by the calcium released inside the cell by the extracellular compartments (Kurosaki *et al.,* 1987; Stab & Ebel, 1987; Ebel, 1995; Tavernier *et al.,* 1995), and determining fungitoxic effects which could obstruct the pathogenic funghi existing in the wood in the substrate colonization and in the production of the toxins assumed to be responsible for the formation of the foliar symptoms. In addition, further mechanisms of action cannot be excluded, consisting in the calcium capability of reinforcing the cell walls, as suggested by the higher presence of druses of calcium oxalate found by the hystological surveys (Figure 11); calcium, normal costituent of the cell wall and of the median lamella, has the capability of linking to the pectins (Conway *et al.*, 1991) by providing a particular mechanical resistance to the cell walls (Kratzke, 1988) which can oppose the penetration of pathogens more effectively. In the subject case such histological barrier could include the action of toxins produced by the funghi in the wood and carried with the transpiratory current towards the canopy, considered currently, even if only hypothetically, a possible cause of the expression of the foliar symptoms of esca (Evidente *et al*., 2000; Tabacchi *et al.*, 2000). Contrary to the effects described for the calcium, the effectiveness of the magnesium-based treatments resulted to be much more controversial in the several , by the way not particular numerous, performed studies. Administrations of magnesium sometimes contribute to obstruct the diseases and the agents thereof, but even indeed to favour them in different cases (Jones *et al*., 1983). Among the positive examples the contrast action on eutipin, toxin of *Eutypa lata*, agent of another disease of wood of grapevine (Colrat *et al.*, 1999). The action of the two mentioned elements would seem to be favoured by the presence of the administered mixture of the extract of algae easing the penetration thereof, bioavailability and distribution in the plant. Such effects could sum to those stimulating the methabolic processes of the host including those replying to the ravages.

## Claims

1. A method for reducing the symptoms on the epigeal apparatus associated with the esca disease of grapevine comprising a step of treating one or more plants of the genus *Vitis* with a composition comprising an extract of algae belonging to the family of *Fucaceae,* CaCl₂ and Mg(NO₃)₂ wherein said extract of algae is in a concentration between 6 and 15% by weight of said composition, said Mg(NO₃)₂ is in a concentration between 24 and 30% by weight of said composition and said CaCl₂ is in a concentration between 30 and 35% by weight of said composition.

2. The method according to claim 1 wherein said extract of algae belongs to the species *Ascophyllum nodosum*, *Fucus vesiculosus*, *Fucus serratus.*

3. The method according to any one of claims 1 to 2 wherein said symptoms comprise a chlorine-necrosis in the internerval spaces on the leaves and specific purple notches on the berries and dieback of varying severity in canopy areas.

4. The method according to any one of claims 1 to 3 wherein said composition further comprises one or more phytopharmaceuticals.

5. The method according to any one of claims 1 to 4 wherein said composition is an aqueous solution or suspension.

6. The method according to any one of claims 1 to 5 wherein said plants belong to the species *Vitis vinifera.*

7. The method according to any one of claims 1 to 6 wherein said composition is applied in an amount comprised between 4 and 5 litres per hectare, preferably 4 litres per hectare.

8. The method according to any one of claims 1 to 7 wherein said composition is applied on the epigeal apparatus of said plants.

9. The method according to any one of claims 1 to 8 wherein said treatment is carried out every 10 days in the months of May, June and July and until the end of the vegetative growth phase of the season.

10. A use of a mixture comprising an extract of algae belonging to the family of *Fucaceae,* CaCl₂ and Mg(NO₃)₂, wherein said extract of algae is in a concentration between 6 and 15% by weight of said mixture, said Mg(NO₃)₂ is in a concentration between 24 and 30% by weight of said mixture and said CaCl₂ is in a concentration between 30 and 35% by weight of said mixture for the treatment of the symptoms on the epigeal apparatus associated with the esca disease of grapevine.

11. The use according to the preceding claim wherein said mixture comprises an extract of algae belonging to the family of *Fucaceae,* CaCl₂ and Mg(NO₃)₂.

12. A composition for application on a plant comprising CaCl₂, Mg(NO₃)₂ and an extract of algae belonging to the family of *Fucaceae* wherein:
- CaCl₂ is in a concentration between 30 and 35% by weight of said composition.
- Mg(NO₃)₂ is in a concentration between 24 and 30% by weight of said composition;
- the extract of algae is in a concentration between 6 and 15% by weight of said composition.

13. The composition according to the preceding claim in the form of aqueous solution or suspension.

14. The composition according to claim 12 or 13 wherein said extract of algae belongs to the species *Ascophyllum nodosum*, *Fucus vesiculosus, Fucus serratus.*

## Patentansprüche

1. Verfahren zum Verringern der mit der Esca-Krankheit der Weinrebe verbundenen Symptome am epigäischen Apparat umfassend
einen Schritt des Behandelns einer oder mehrerer Pflanzen der Gattung *Vitis* mit einem Stoffgemisch umfassend einen Extrakt von Algen, die zur Familie der *Fucaceae* gehören, CaCl₂ und Mg(NO₃)₂, wobei der Extrakt von Algen in einer Konzentration zwischen 6 und 15 Gewichtsprozent des Stoffgemischs ist, das Mg(NO₃)₂ in einer Konzentration zwischen 24 und 30 Gewichtsprozent des Stoffgemischs ist, und das CaCl₂ in einer Konzentration zwischen 30 und 35 Gewichtsprozent des Stoffgemischs ist.

2. Verfahren gemäß Anspruch 1, wobei der Extrakt von Algen ist, die zur Art *Ascophyllum nodosum*, *Fucus vesiculosus*, *Fucus serratus* gehören.

3. Verfahren gemäß Anspruch 1 oder 2, wobei die Symptome eine Chlor-Nekrose in den Internervalräumen auf den Blättern und spezifische violette Kerben auf den Beeren und ein Absterben unterschiedlicher Schwere im Kronendach umfassen.

4. Verfahren gemäß einem der Ansprüche 1 bis 3, wobei das Stoffgemisch ferner eine oder mehrere phytopharmazeutische Mittel umfasst.

5. Verfahren gemäß einem der Ansprüche 1 bis 4, wobei das Stoffgemisch eine wässrige Lösung oder Suspension ist.

6. Verfahren gemäß einem der Ansprüche 1 bis 5, wobei die Pflanzen zur Art *Vitis vinifera* gehören.

7. Verfahren gemäß einem der Ansprüche 1 bis 6, wobei das Stoffgemisch in einer Menge zwischen 4 und 5 Litern pro Hektar, vorzugsweise 4 Liter pro Hektar angewendet wird.

8. Verfahren gemäß einem der Ansprüche 1 bis 7, wobei das Stoffgemisch auf den epigäischen Apparat der Pflanzen angewendet wird.

9. Verfahren gemäß einem der Ansprüche 1 bis 8, wobei die Behandlung alle 10 Tage in den Monaten Mai, Juni und Juli und bis zum Ende der vegetativen Wachstumsphase des Jahres ausgeführt wird.

10. Verwendung einer Mischung umfassend einen Extrakt von Algen, die zu der Familie der *Fucaceae* gehören, CaCl₂ und Mg(NO₃)₂, wobei der Extrakt von Algen in einer Konzentration zwischen 6 und 15 Gewichtsprozent der Mischung vorliegt, das Mg(NO₃)₂ in einer Konzentration zwischen 24 und 30 Gewichtsprozent der Mischung vorliegt und das CaCl₂ in einer Konzentration zwischen 30 und 35 Gewichtsprozent der Mischung vorliegt, für das Behandeln der Symptome am epigäischen Apparat, die mit der Esca-Krankheit von Weinreben assoziiert sind.

11. Verwendung gemäß dem vorhergehenden Anspruch, wobei die Mischung ein Extrakt von Algen, die zur Familie der *Fucaceae* gehören, CaCl₂ und Mg(NO₃)₂, umfasst.

12. Stoffgemisch zur Anwendung auf einer Pflanze umfassend CaCl₂, Mg(NO₃)₂ und einen Extrakt von Algen, die zur Familie der *Fucaceae* gehören, wobei:
- CaCl₂ in einer Konzentration zwischen 30 und 35 Gewichtsprozent des Stoffgemischs vorliegt;
- Mg(NO₃)₂ in einer Konzentration zwischen 24 und 30 Gewichtsprozent des Stoffgemischs vorliegt;
- der Extrakt von Algen in einer Konzentration zwischen 6 und 15 Gewichtsprozent des Stoffgemischs vorliegt.

13. Stoffgemisch gemäß dem vorhergehenden Anspruch in der Form einer wässrigen Lösung oder Suspension.

14. Stoffgemisch gemäß Anspruch 12 oder 13, wobei der Extrakt von Algen stammt, die zur Art *Ascophyllum nodosum*, *Fucus vesiculosus* oder *Fucus serratus* gehören.

## Revendications

1. Procédé pour réduire les symptômes sur le système foliacé associés à la maladie esca de la vigne, comprenant une étape de traitement d'une ou plusieurs plantes du genre *Vitis* avec une composition comprenant un extrait d'algue appartenant à la famille *Fucaceae,* du CaCl₂ et du Mg(NO₃)₂, dans lequel ledit extrait d'algue est à une concentration comprise entre 6 et 15 % en poids de ladite composition, ledit Mg(NO₃)₂ est à une concentration comprise entre 24 et 30 % en poids de ladite composition, et ledit CaCl₂ est à une concentration comprise entre 30 et 35 % en poids de ladite composition.

2. Procédé selon la revendication 1, dans lequel ledit extrait d'algue appartient à l'espèce *Ascophyllum nodosum*, *Fucus vesiculosus*, *Fucus serratus.*

3. Procédé selon l'une quelconque des revendications 1 et 2, dans lequel lesdits symptômes comprennent une nécrose chlorée dans les espaces internervaux sur les feuilles et des rainures pourpres spécifiques sur les baies et un dépérissement de sévérité variable dans les zones de canopée.

4. Procédé selon l'une quelconque des revendications 1 à 3, dans lequel ladite composition comprend en outre un ou plusieurs agents phytopharmaceutiques.

5. Procédé selon l'une quelconque des revendications 1 à 4, dans lequel ladite composition est une solution ou suspension aqueuse.

6. Procédé selon l'une quelconque des revendications 1 à 5, dans lequel lesdites plantes appartiennent à l'espèce *Vitis vinifera.*

7. Procédé selon l'une quelconque des revendications 1 à 6, dans lequel ladite composition est appliquée en une quantité comprise entre 4 et 5 litres par hectare, de préférence 4 litres par hectare.

8. Procédé selon l'une quelconque des revendications 1 à 7, dans lequel ladite composition est appliquée sur le système foliacé desdites plantes.

9. Procédé selon l'une quelconque des revendications 1 à 8, dans lequel ledit traitement est réalisé tous les 10 jours pendant les mois de mai, juin et juillet et jusqu'à la fin de la phase de croissance végétative de la saison.

10. Utilisation d'un mélange comprenant un extrait d'algue appartenant à la famille *Fucaceae,* du CaCl₂ et du Mg(NO₃)₂, dans laquelle ledit extrait d'algue est à une concentration comprise entre 6 et 15 % en poids dudit mélange, ledit Mg(NO₃)₂ est à une concentration comprise entre 24 et 30 % en poids dudit mélange, et ledit CaCl₂ est à une concentration comprise entre 30 et 35 % en poids dudit mélange, pour le traitement des symptômes sur le système foliacé associés à la maladie esca de la vigne.

11. Utilisation selon la revendication précédente, dans laquelle ledit mélange comprend un extrait d'algue appartenant à la famille *Fucaceae,* du CaCl₂ et du Mg(NO₃)₂.

12. Composition pour une application sur une plante comprenant du CaCl₂, du Mg(NO₃)₂ et extrait d'algue appartenant à la famille *Fucaceae*, dans laquelle :
- le CaCl₂ est à une concentration comprise entre 30 et 35 % en poids de ladite composition ;
- le Mg(NO₃)₂ est à une concentration comprise entre 24 et 30 % en poids de ladite composition ;
- l'extrait d'algue est à une concentration comprise entre 6 et 15 % en poids de ladite composition.

13. Composition selon la revendication précédente, sous la forme d'une solution ou suspension aqueuse.

14. Composition selon la revendication 12 ou 13, dans laquelle ledit extrait d'algue appartient à l'espèce *Ascophyllum nodosum, Fucus vesiculosus, Fucus serratus.*
